# EUROPEAN PATENT APPLICATION

(11) **EP 4 826 827 A1**
(43) Date of publication of application: **21.10.2026**
(21) Application number: 24905566.6
(22) Date of filing: 08.08.2024
(51) Int. Cl.: H01M 10/0569, H01M 10/0525, H01M 50/30, H01M 50/107

(54) **SECONDARY BATTERY CELL, SECONDARY BATTERY AND ELECTRIC DEVICE**

(30) Priority: 20.12.2023 CN 202311763673
(71) Applicant: Contemporary Amperex Technology Co., Limited, Ningde, Fujian 352100 (CN)
(72) Inventor: WEI, Xichen, Ningde, Fujian 352100 (CN); CHENG, Cheng, Ningde, Fujian 352100 (CN); WANG, Dandan, Ningde, Fujian 352100 (CN); XUE, Junpeng, Ningde, Fujian 352100 (CN)
(74) Representative: Gong, Jinping
(86) International application number: PCT/CN2024/110729
(87) International publication number: WO 2025/130070

(57) **Abstract**

A secondary battery cell, a secondary battery, and an electric device are provided. The secondary battery cell includes a cylindrical housing, an electrode assembly, a first end cover assembly, and a second end cover assembly. The cylindrical housing has an accommodating chamber and a first opening and a second opening communicating with the accommodating chamber. The electrode assembly is arranged within the accommodating chamber. The first end cover assembly covers the first opening. The second end cover assembly covers the second opening. The first end cover assembly includes a first pressure relief mechanism. The second end cover assembly includes a second pressure relief mechanism. The secondary battery cell further includes an electrolyte. The electrolyte includes a solvent. The solvent includes dimethyl carbonate. A mass percentage content of the dimethyl carbonate in the solvent is greater than or equal to 50 wt%. The secondary battery cell satisfies that (S₁+S₂)/C₀ is greater than or equal to 2.5 mm²/Ah. The secondary battery has a high energy density, good cycle performance, and high reliability.

## Description

### CROSS-REFERENCE TO RELATED APPLICATIONS

The present disclosure claims priority to Chinese Patent Application No. 202311763673.8, filed on December 20, 2023 and entitled "Battery Cell, Battery, and Electric Device", which is incorporated herein by reference in its entirety.

### TECHNICAL FIELD

The present application relates to a secondary battery cell, a secondary battery, and an electric apparatus.

### BACKGROUND

With the increasingly widespread application of secondary batteries, people also have increasing use demands for the secondary batteries, such as increasing demands for the energy density of the secondary batteries. In general, with an increase in the energy density of the secondary batteries, side reactions inside the secondary batteries also increase. With the increase in the side reactions inside the secondary batteries, gas generated inside the secondary batteries increases, thereby adversely affecting the reliability of the secondary batteries. How to make the secondary batteries have both a high energy density and high reliability is still an urgent problem to be solved at present.

### SUMMARY

The present disclosure provides a secondary battery cell, a secondary battery, and an electric device, enabling the secondary battery to have a high energy density, good cycle performance, and high reliability.

In a first aspect, the present disclosure provides a secondary battery cell. The secondary battery cell includes a cylindrical housing, an electrode assembly, a first end cover assembly, and a second end cover assembly. The cylindrical housing has an accommodating chamber and a first opening and a second opening communicating with the accommodating chamber. The electrode assembly is arranged within the accommodating chamber. The first end cover assembly covers the first opening. The second end cover assembly covers the second opening. The first end cover assembly includes a first pressure relief mechanism. The second end cover assembly includes a second pressure relief mechanism. The secondary battery cell further includes an electrolyte. The electrolyte includes a solvent. The solvent includes dimethyl carbonate. A mass percentage content of the dimethyl carbonate in the solvent is greater than or equal to 50 wt%. The first pressure relief mechanism has a first pressure relief portion. An area of the first pressure relief portion is denoted as S₁, in unit of mm². The second pressure relief mechanism has a second pressure relief portion. An area of the second pressure relief portion is denoted as S₂, in unit of mm². A capacity of the secondary battery cell is denoted as C₀, in unit of Ah. The secondary battery cell satisfies that (S₁+S₂)/C₀ is greater than or equal to 2.5mm²/Ah.

Through the mass percentage content of the dimethyl carbonate in the electrolyte solvent greater than or equal to 50 wt%, the electrolyte may have a low viscosity, which facilitates flow of the electrolyte, thereby improving an electrolyte infiltration property of the electrode assembly and improving cycle performance of the secondary battery cell. The provision of the pressure relief mechanisms at both ends of the secondary battery cell facilitates quick discharge of emissions inside the secondary battery cell, achieving the purpose of pressure relief in a short time. Additionally, impact forces applied to the cylindrical housing by emissions ejected from the two pressure relief mechanisms have opposite directions, thereby reducing a risk of deformation and tearing of the secondary battery cell to a certain extent. The adjustment of (S₁+S₂)/C₀ to be within the foregoing range facilitates a dynamic balance achieved between a gas production rate and a gas exhaust amount of the secondary battery cell, which thereby may effectively reduce or even prevent safety accidents such as fire and explosion of the secondary battery cell.

Therefore, the secondary battery cell provided in the embodiments of the present disclosure has a good electrolyte infiltration property, so that the secondary battery cell may have good cycle performance. In addition, the secondary battery cell provided in the embodiments of the present disclosure may further enable quick pressure release in an abuse state, so that the secondary battery cell may also have high reliability.

In some embodiments, the secondary battery cell satisfies that (S₁+S₂)/C₀is 4.0 mm²/Ah-5.0 mm²/Ah.

The adjustment of (S₁+S₂)/C₀ to be within the foregoing range facilitates a dynamic balance achieved between a gas production rate and a gas exhaust amount of the secondary battery cell, which thereby may effectively reduce or even prevent safety accidents such as fire and explosion of the secondary battery cell. Meanwhile, the end cover assembly may further be enabled to have good processing performance because a larger area of a pressure relief portion of a pressure relief mechanism means more difficulty in processing the end cover assembly and thus does not facilitate a reduction in a cost of a secondary battery cell and large-scale production of the secondary battery cell.

In some embodiments, a dimension of the secondary battery cell in an axial direction is denoted as L, in unit of mm. The secondary battery cell satisfies that (S₁+S₂)/ L is greater than or equal to 0.6 mm, optionally 0.7 mm-0.9 mm.

Through the adjustment of a ratio of a total area of the pressure relief portions of the two pressure relief mechanisms to the dimension of the secondary battery cell in the axial direction of the secondary battery cell, (S₁+S₂)/L, to be within the above range, it is beneficial to quickly discharge emissions inside the secondary battery cell, and achieve a pressure relief purpose in a short time, which thereby may effectively reduce or even prevent safety accidents such as fire and explosion of the secondary battery cell.

In some embodiments, a ratio of an area of the first pressure relief portion to an area of the second pressure relief portion is 0.8-1.2.

In some embodiments, the ratio of the area of the first pressure relief portion to the area of the first end cover assembly is greater than or equal to 0.02: 1, optionally (0.04-0.10): 1.

Therefore, it is beneficial to quickly discharge emissions inside the secondary battery cell, and achieve a pressure relief purpose in a short time, which thereby may effectively reduce or even prevent safety accidents such as fire and explosion of the secondary battery cell, and also may enable good processing performance of the first end cover assembly.

In some embodiments, a ratio of the area of the second pressure relief portion to an area of the second end cover assembly is greater than or equal to 0.02: 1, optionally (0.04-0.10): 1.

Therefore, it is beneficial to quickly discharge emissions inside the secondary battery cell, and achieve a pressure relief purpose in a short time, which thereby may effectively reduce or even prevent safety accidents such as fire and explosion of the secondary battery cell, and also may enable good processing performance of the first end cover assembly.

In some embodiments, a center of the electrode assembly has a center hole extending in an axial direction of the secondary battery cell. A diameter of the center hole is greater than or equal to 5 mm, optionally 6 mm-8 mm.

Through the adjustment of the diameter of the center hole to be within the above range, it is beneficial to quickly discharge emissions inside the secondary battery cell, and achieve a pressure relief purpose in a short time, which thereby may effectively reduce or even prevent safety accidents such as fire and explosion of the secondary battery cell.

In some embodiments, a diameter of the secondary battery cell is greater than or equal to 40 mm, optionally 45 mm-60 mm. As such, the secondary battery cell may have a high capacity.

In some embodiments, a dimension L of the secondary battery cell in an axial direction is greater than or equal to 130 mm, optionally 150 mm-320 mm. As such, the secondary battery cell may have a high capacity.

In some embodiments, a capacity C₀ of the secondary battery cell is greater than or equal to 20 Ah, optionally greater than or equal to 30 Ah.

In some embodiments, a mass percentage content of the dimethyl carbonate in the solvent is 55 wt% -70 wt%. Therefore, an electrolyte infiltration property of the electrode assembly may be improved, so that the secondary battery cell has good cycle performance.

In some embodiments, the solvent further includes one or both of ethylene carbonate and ethyl methyl carbonate. Therefore, the electrolyte may have high ion conductivity and a wide electrochemical window while it has good fluidity, and thus the secondary battery cell may have better cycle performance.

Optionally, a mass percentage content of the ethylene carbonate in the solvent is less than or equal to 25 wt%.

Optionally, a mass percentage content of the ethyl methyl carbonate in the solvent is less than or equal to 25 wt%.

In some embodiments, the electrolyte further includes an additive, and the additive includes one or two of fluoroethylene carbonate and vinylene carbonate.

The additive may participate in the formation of a solid electrolyte interface film on a surface of a negative electrode, thereby contributing to the improvement of the cycle performance of the secondary battery cell.

In some embodiments, a viscosity of the electrolyte at 25 °C is less than or equal to 5 mPa·s, optionally less than or equal to 3 mPa·s.

In some embodiments, a conductivity of the electrolyte at 25 °C is 8 mS/cm-16 mS/cm, optionally 9 mS/cm to 12 mS/cm.

In some embodiments, both the first pressure relief mechanism and the second pressure relief mechanism are symmetrically arranged. As such, paths of discharged emissions may be in a straight line, which is beneficial to quickly discharge emissions inside the secondary battery cell, and achieve a pressure relief purpose in a short time, which thereby may effectively reduce or even prevent safety accidents such as fire and explosion of the secondary battery cell.

In some embodiments, shapes of the first pressure relief mechanism and the second pressure relief mechanism each independently comprise a circular shape, an elliptical shape, or a racetrack shape.

In some embodiments, the first end cover assembly includes a first cover plate, and the first pressure relief mechanism is located on the first cover plate or the first pressure relief mechanism is integrally formed with the first cover plate.

In some embodiments, the second end cover assembly includes a second cover plate, and the second pressure relief mechanism is located on the second cover plate or the second pressure relief mechanism is integrally formed with the second cover plate.

In some embodiments, the first end cover assembly includes a first electrode terminal. The second end cover assembly includes a second electrode terminal. The first electrode terminal and the second electrode terminal have opposite polarities. A distance between a geometric center point of the first pressure relief mechanism and a geometric center point of the first electrode terminal is 6 mm-14 mm; and/or a distance between a geometric center point of the second pressure relief mechanism and a geometric center point of the second electrode terminal is 6 mm-14 mm.

In some embodiments, the electrode assembly includes a positive electrode sheet. The positive electrode sheet includes a positive electrode current collector and a positive electrode film layer located on at least a surface of the positive electrode current collector. The positive electrode film layer includes a positive electrode active material. The positive electrode active material includes one or more of lithium phosphate and a lithium transition metal oxide. Optionally, the positive electrode active material includes a lithium-containing phosphate, and a mass ratio of the lithium-containing phosphate in the positive electrode active material is greater than or equal to 60 wt%.

In some embodiments, a coating weight of the positive electrode film layer is greater than or equal to 16 mg/cm², optionally, 18 mg/cm²-25 mg/cm²

In some embodiments, a compacted density of the positive electrode film layer is greater than or equal to 2.2 g/cm³, optionally 2.25 g/cm³ -2.6 g/cm³.

In a second aspect, the present disclosure provides a secondary battery including the secondary battery cell of the first aspect.

In a third aspect, the present disclosure provides an electric device including the secondary battery of the second aspect of the present disclosure. The secondary battery is configured to provide electric energy.

The electric device in the present disclosure includes the secondary battery provided by the present disclosure, and thus has at least the same advantages as the secondary battery.

### BRIEF DESCRIPTION OF THE DRAWINGS

In order to more clearly illustrate the technical solutions in the embodiments of the present disclosure, drawings required to be used in the embodiments of the present disclosure are briefly described below. It is clear that the drawings described below show only some embodiments of the present disclosure, and those skilled in the art may further derive other drawings from the drawings without creative effort.
FIG. 1 is a schematic structural diagram of a vehicle according to some embodiments of the present disclosure.
FIG. 2 is an exploded schematic view of a secondary battery according to some embodiments of the present disclosure.
FIG. 3 is an exploded schematic view of the battery module shown in FIG. 2.
FIG. 4 is an exploded schematic view of a secondary battery cell according to some embodiments of the present disclosure.
FIG. 5 is a schematic structural diagram of a first end cover assembly according to some embodiments of the present disclosure.
FIG. 6 is a schematic structural diagram of a second end cover assembly according to some embodiments of the present disclosure.
FIG. 7 is a schematic diagram of a connection of a first pressure relief mechanism with a first cover plate according to some embodiments of the present disclosure.
FIG. 8 is a schematic diagram of a connection of a second pressure relief mechanism with a second cover plate according to some embodiments of the present disclosure.

The figures are not necessarily drawn to the actual scale.

Reference numerals are described as follows: 1. Vehicle; 2. Secondary battery; 3. Controller; 4. Motor; 5. Box; 5a. First box portion; 5b. Second box portion; 5c. Accommodating space; 6. Battery module; 7. Secondary battery cell; 8. First end cover assembly; 81. First pressure relief mechanism; 811. First pressure relief portion; 812. First connecting portion; 82. First electrode terminal; 83. First cover plate; 84. Liquid injection hole; 9. Second end cover assembly; 91. Second pressure relief mechanism; 911. Second pressure relief portion; 912. Second connecting portion; 92. Second electrode terminal; 93. Second cover plate; 10. Cylindrical housing.

### DETAILED DESCRIPTION OF PREFERRED EMBODIMENTS

Implementations where an electrode sheet, a secondary battery cell, a secondary battery, and an electric device of the present disclosure are specifically disclosed are described below in detail with appropriate reference to the drawings. However, an unnecessary detailed description may be omitted. For example, a detailed description of well-known matters and repeated descriptions of a substantially same structure may be omitted. This is to avoid the following descriptions from becoming unnecessarily redundant and to facilitate understanding by those skilled in the art. In addition, the accompanying drawings and the following descriptions are provided for those skilled in the art to fully understand the present disclosure, and are not intended to limit the subject matter described in the claims.

The "range" disclosed in this disclosure is limited in the form of a lower limit and an upper limit. A given range is limited by selecting a lower limit and an upper limit, which define the boundaries of the specific range. A range defined in this manner may include an end value or may not include an end value, and may be any combination, that is, any lower limit may be combined with any upper limit to form a range. For example, if the ranges of 60-120 and 80-110 are listed for a specific parameter, it is understood that the ranges of 60-110 and 80-120 are also expected. In addition, if the minimum range values of 1 and 2 are listed, and if the maximum range values of 3, 4, and 5 are listed, the following ranges may all be expected: 1-3, 1-4, 1-5, 2-3, 2-4, and 2-5. In the present disclosure, unless otherwise stated, a numerical range "a to b" represents a shorthand representation for a combination of any real numbers between a and b, where both a and b are real numbers. For example, the numerical range of "0-5" represents that all real numbers between "0-5" have been listed herein, and "0-5" is only a shortened representation of these numerical combinations. In addition, when a parameter is expressed as an integer ≥ 2, it is equivalent to disclosing that the parameter is an integer such as 2, 3, 4, 5, 6, 7, 8, 9, 10, 11, or 12.

Unless otherwise specified, all embodiments and optional embodiments of the present disclosure may be combined with each other to form new technical solutions, and it is conceivable that such technical solutions should be included in the disclosure of the present disclosure.

Unless otherwise specified, all technical solutions and optional technical solutions of the present disclosure may be combined with each other to form new technical solutions, and it is conceivable that such technical solutions should be included in the disclosure of the present disclosure.

Unless otherwise specified, all steps in the present disclosure may be performed sequentially or randomly, preferably sequentially. For example, the method comprises steps (a) and (b), meaning that the method may comprise steps (a) and (b) performed sequentially or steps (b) and (a) performed sequentially. For example, the mentioned method may further comprise step (c), meaning that step (c) may be added to the method in any order, e.g. the method may comprise steps (a), (b) and (c), or steps (a), (c) and (b), or steps (c), (a) and (b), etc.

In the present disclosure, terms "first", "second", and the like are used to distinguish different objects and are not intended to describe a particular order or primary/secondary relationship, unless otherwise specified.

In the present disclosure, the terms "a plurality of" and "various" mean two or more.

In the description of the embodiments of the present disclosure, unless otherwise specified, a first feature being "above" or "below" a second feature may be that the first feature is in direct contact with the second feature, or the first feature is in indirect contact with the second feature through an intermediate medium. Moreover, the first feature being "over", "above", or "on" the second feature may be that the first feature is directly above or diagonally above the second feature, or merely indicate that the first feature is horizontally higher than the second feature. The first feature being "below", "under", or "beneath" the second feature may be that the first feature is directly below or diagonally below the second feature, or merely indicate that the first feature is horizontally lower than the second feature.

Unless otherwise specified, the terms used in the present disclosure have the meanings commonly understood by those skilled in the art.

Unless otherwise specified, the numerical values of each parameter mentioned in the present disclosure can be measured by various test methods commonly used in the art, for example, they can be measured according to the test methods provided in the embodiments of the present disclosure. A test temperature for each parameter is 25°C, unless otherwise specified.

A secondary battery mentioned in the embodiments of the present disclosure may be a single physical module including one or more secondary battery cells to provide a higher voltage and capacity. For example, the secondary battery mentioned in the present disclosure may include a secondary battery cell, a battery module, a battery pack, or the like. The secondary battery cell is a minimum unit constituting a secondary battery, which can implement charge and discharge functions alone. When there are a plurality of secondary battery cells, the plurality of secondary battery cells are connected in series, in parallel, or in series-parallel via a busbar component. In some embodiments, the secondary battery may be a battery module; and when there are a plurality of secondary battery cells, the plurality of secondary battery cells are arranged and fixed to form a battery module. In some embodiments, the secondary battery may be a battery pack including a box and a secondary battery cell, and the secondary battery cell or the battery module is accommodated in the box. In some embodiments, the box may be a part of a chassis structure of a vehicle. For example, a part of the box body may be at least part of a chassis of a vehicle, or a part of the box body may be at least part of a transverse beam and a longitudinal beam of a vehicle.

In some embodiments, the secondary battery may be an energy storage device. The energy storage device includes an energy storage container, an energy storage cabinet, and the like.

The technical solutions described in the embodiments of the present disclosure are applicable to a secondary battery and an electric device using the secondary battery.

The secondary battery may be used as a power supply for the electrical device, or as an energy storage unit for the electric device. The electric device may include, but is not limited to, a mobile apparatus (e.g., a cell phone, a tablet computer, a notebook computer, etc.), a vehicle (e.g., a pure electric vehicle, a hybrid electric vehicle, a plug-in hybrid electric vehicle, an electric bicycle, an electric scooter, an electric golf cart, an electric truck, etc.), an electric train, a ship, a satellite, an energy storage system, and the like.

The type of the secondary battery of the electric device may be selected according to a use demand, for example, a secondary battery cell, a battery module, or a battery pack.

To facilitate description, in the following embodiments, as an example for description, an electric device is a vehicle.

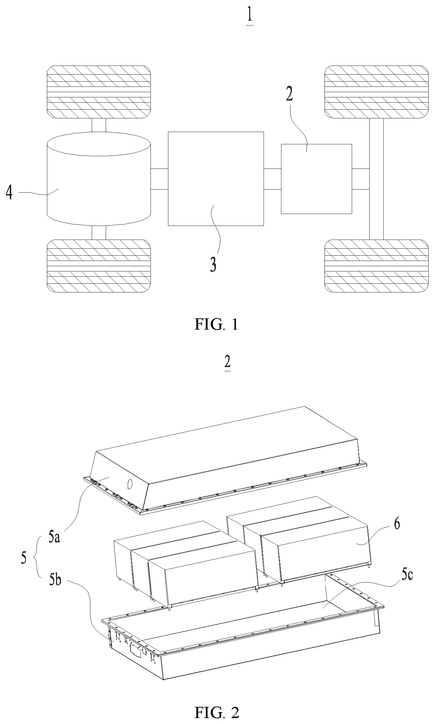

FIG. 1 is a schematic structural diagram of a vehicle according to some embodiments of the present disclosure.

As shown in FIG. 1, inside the vehicle 1, a secondary battery 2 is provided. The secondary battery 2 may be provided at the bottom, head, or tail of the vehicle 1. The secondary battery 2 may be used to power the vehicle 1. For example, the secondary battery 2 may be used as an operating power source of the vehicle 1.

The vehicle 1 may further include a controller 3 and a motor 4, where the controller 3 is used to control the secondary battery 2 to power the motor 4, for example, for a working power requirement of the vehicle 1 during starting, navigating, and driving.

In some embodiments, the secondary battery 2 may be used not only as an operating power source for the vehicle 1, but also as a driving power source for the vehicle 1, instead of or partially instead of fuel or natural gas to provide driving power for the vehicle 1.

FIG. 2 is an exploded schematic view of a secondary battery according to some embodiments of the present disclosure. As shown in FIG. 2, the secondary battery 2 includes a box 5 and a secondary battery cell (not shown). The secondary battery cell is accommodated in the box 5.

The box 5 is used to accommodate the secondary battery cell, and the box 5 may have various structures. In some embodiments, the box 5 may include a first box portion 5a and a second box portion 5b, the first box portion 5a and the second box portion 5b cover each other, and the first box portion 5a and the second box portion 5b jointly define the accommodation space 5c for accommodating the secondary battery cell. The second box portion 5b may be a hollow structure with an opening at one end, the first box portion 5a is a plate-shaped structure, and the first box portion 5a covers an opening side of the second box portion 5b to form the box 5 having the accommodation space 5c; and the first box portion 5a and second box portion 5b may also both be a hollow structure with an opening at one end, and an opening side of the first box portion 5a covers an opening side of the second box portion 5b to form the box 5 having the accommodation space 5c. Certainly, the first box portion 5a and second box portion 5b may be in various shapes such as cylinder, rectangular cuboid, etc.

To increase sealing performance after the first box portion 5a and the second box portion 5b are connected, a sealing member, for example, a sealant or a sealing ring or the like may be provided between the first box portion 5a and the second box portion 5b.

Assuming that the first box portion 5a covers the top of the second box portion 5b, the first box portion 5a may also be referred to as an upper box cover, and the second box portion 5b may also be referred to as a lower box.

In the secondary battery 2, one or more secondary battery cells may be provided. If a plurality of secondary battery cells are provided, the plurality of secondary battery cells may be subjected to series connection, parallel connection, or series-parallel connection, and the series-parallel connection means that the plurality of secondary battery cells are subjected to both series connection, and parallel connection. The plurality of secondary battery cells may be subjected to series connection, parallel connection, or series-parallel connection directly, and then a combination formed by the plurality of secondary battery cells is accommodated in a box 5. Certainly, alternatively, the plurality of battery cells are first subjected to series connection, parallel connection, or series-parallel connection to form the battery module 6, then the plurality of battery modules 6 are subjected to series connection, parallel connection, or series-parallel connection to form a combination, and the combination is accommodated in the box 5.

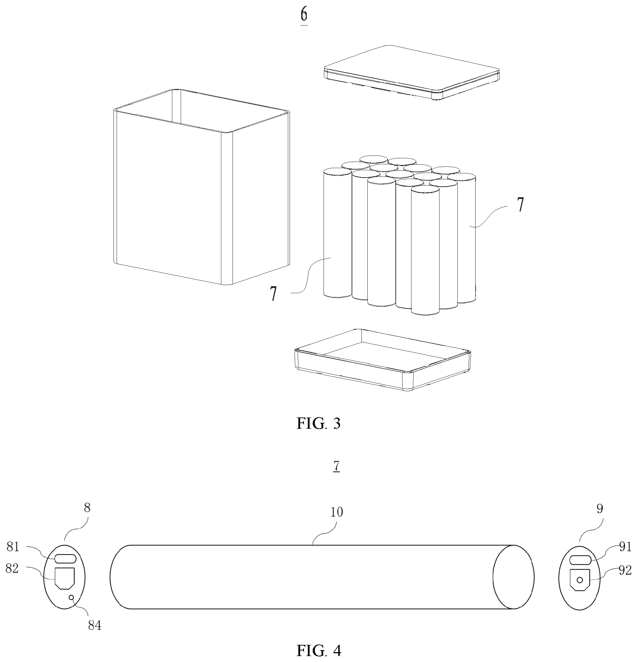

FIG. 3 is an exploded schematic view of the battery module shown in FIG. 2.

As shown in FIG. 3, in some embodiments, a plurality of secondary battery cells 7 are provided. The plurality of secondary battery cells 7 are first subjected to series connection, parallel connection, or series-parallel connection to form the battery module 6. A plurality of battery modules 6 are subjected to series connection, parallel connection, or series-parallel connection to form a combination, and the combination is accommodated in a box.

The plurality of secondary battery cells 7 in the battery module 6 may be electrically connected by a current convergence component to implement parallel connection, series connection, or series-parallel connection of the plurality of battery cells 7 in the battery module 6.

The secondary battery cell mentioned in the embodiments of the present disclosure may include a lithium-ion secondary battery cell.

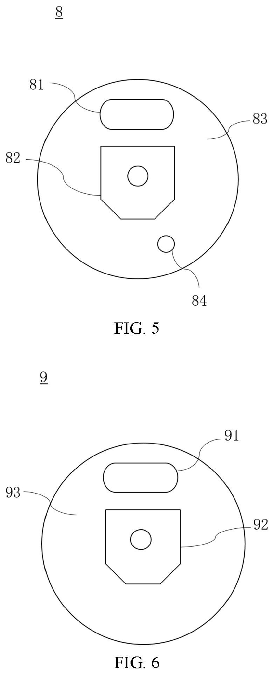

FIG. 4 is an exploded schematic view of a secondary battery cell according to some embodiments of the present disclosure. FIG. 5 is a schematic structural diagram of a first end cover assembly according to some embodiments of the present disclosure. FIG. 6 is a schematic structural diagram of a second end cover assembly according to some embodiments of the present disclosure.

As shown in FIG. 4 to FIG. 6, the secondary battery cell 7 includes a cylindrical housing 10, an electrode assembly (not shown), a first end cover assembly 8, and a second end cover assembly 9. The cylindrical housing 10 has an accommodating chamber and a first opening and a second opening that are in communication with the accommodating chamber. The electrode assembly is arranged in the accommodating chamber. The first end cover assembly 8 covers the first opening. The second end cover assembly 9 covers the second opening. The first end cover assembly 8 includes a first pressure relief mechanism 81. The second end cover assembly 9 includes a second pressure relief mechanism 91.

The secondary battery cell 7 further includes an electrolyte. The electrolyte includes a solvent. The solvent includes dimethyl carbonate (DMC). A mass percentage content of the dimethyl carbonate in the solvent is greater than or equal to 50 wt%.

The first pressure relief mechanism 81 has a first pressure relief portion, and an area of the first pressure relief portion is denoted as S₁ in unit of mm². The second pressure relief mechanism 91 has a second pressure relief portion, and an area of the second pressure relief portion is denoted as S₂ in unit of mm². A capacity of the secondary battery cell 7 is denoted as C₀ in unit of Ah. The secondary battery cell 7 satisfies that (S₁+S₂)/C₀ is greater than or equal to 2.5 mm²/Ah.

With the widespread use of a cylindrical secondary battery cell, the demand for its capacity is increasing, and thus, the secondary battery cells is also designed to have a larger and larger dimension, thereby easily generating a problem of difficulty in electrolyte infiltration, which in turn affects the service life of the secondary battery cell.

In the embodiments of the present disclosure, through the mass percentage content of the dimethyl carbonate in the electrolyte solvent greater than or equal to 50 wt%, the electrolyte may have a low viscosity, which facilitates flow of the electrolyte, thereby improving an electrolyte infiltration property of the electrode assembly and improving cycle performance of the secondary battery cell. However, when the mass-percentage content of dimethyl carbonate in the electrolyte solvent is greater than or equal to 50 wt%, an electrochemical window of the electrolyte is usually low, and the electrolyte is more likely to decompose to generate gas during use of a secondary battery cell and in an abuse state of the secondary battery cell, resulting in a relatively large amount of gas inside the secondary battery cell. If the gas generated inside the secondary battery cell cannot be discharged in time, the electrode assembly is pressed to affect an electrolyte infiltration property thereof, and even worse, safety accidents may occur, such as fire and explosion.

At present, a pressure relief mechanism is usually added in designing a secondary battery cell. Under an abuse state for the secondary battery cell, side reactions inside the secondary battery cell are increased. Due to an increase in gas generated by the side reactions, the pressure relief mechanism may discharge the gas inside the secondary battery cell. However, in the practical application of the secondary battery cell, problems such as untimely pressure relief and a slow pressure relief speed often occur for the pressure relief mechanism, further causing that safety accidents such as fire and explosion easily occur in the secondary battery cell in an abuse state.

The pressure relief mechanism refers to an element or component that is actuated when the internal pressure of the secondary battery cell reaches a predetermined threshold value to relieve the internal pressure of the secondary battery cell. The threshold value varies depending on design requirements of a secondary battery cell. The pressure relief mechanism may be in the form of, for example, an explosion-proof valve, a gas valve, a pressure relief valve, a safety valve, or the like, and may specifically be a pressure-sensitive assembly or configuration. That is, when the internal pressure of the secondary battery cell reaches a predetermined threshold value, the pressure relief mechanism performs an action or a weak structure provided in the pressure relief mechanism is broken, thereby forming an opening or a channel through which the internal pressure can be drained.

"Actuate" mentioned herein refers to that the pressure relief mechanism takes an action or is activated in a state such that the internal pressure of the secondary battery cell is drained. The action taken by the pressure relief mechanism may include, but is not limited to, breaking, rupturing, tearing or opening, etc of at least a portion of the pressure relief mechanism. When the pressure relief mechanism is actuated, the gas inside the secondary battery cell is discharged as an emission from an actuated part. In this way, pressure relief can be enabled for the secondary battery cell under a controllable pressure, which thereby may reduce the occurrence of potentially more serious safety accidents such as fire and explosion.

The emissions from the interior of the secondary battery cell mentioned in the present disclosure include, but are not limited to: electrolyte solution, dissolved or split electrode sheets, fragments of the separator, gas generated by reactions, and so on.

The pressure relief mechanisms are arranged at both ends of the secondary battery cell provided in the embodiments of the present disclosure, thereby facilitating rapid discharge of the emissions inside the secondary battery cell and achieving the purpose of pressure relief in a short time. Additionally, impact forces applied to the cylindrical housing by emissions ejected from the two pressure relief mechanisms have opposite directions, thereby reducing a risk of deformation and tearing of the secondary battery cell to a certain extent.

As a capacity of a secondary battery cell increases, a gas amount generated by the secondary battery cell generally increases accordingly. Especially in the abuse state, the gas amount generated by the secondary battery cell further increases. The adjustment of an area of a pressure relief portion corresponding to a unit capacity, namely, (S₁+S₂)/C₀, to be within the foregoing range facilitates a dynamic balance achieved between a gas production rate and a gas exhaust amount of the secondary battery cell, which thereby may effectively reduce or even prevent safety accidents such as fire and explosion of the secondary battery cell.

Therefore, the secondary battery cell provided in the embodiments of the present disclosure has a good electrolyte infiltration property, so that the secondary battery cell may have good cycle performance. In addition, the secondary battery cell provided in the embodiments of the present disclosure may further enable quick pressure release in an abuse state, so that the secondary battery cell may also have high reliability.

A capacity C₀ of a secondary battery cell may be tested and obtained based on the following method: A secondary battery cell is allowed to stand at 25 °C for 5 min, and then is discharged at a constant current of 0.33 C to a lower cut-off voltage; after standing for 5 min, the secondary battery cell is charged at a constant current of 0.33 C to an upper cut-off voltage, and then charged at a constant voltage of the upper cut-off voltage to a current of 0.05 C; and after standing for 5 min, the secondary battery cell is discharged at a constant current of 0.33 C to the lower cut-off voltage, and a discharge capacity at this time is recorded as the capacity C₀ of the secondary battery cell.

The upper cut-off voltage and the lower cut-off voltage may employ charge and discharge voltages recommended in a product specification of a secondary battery cell.

For example, when a positive electrode active material includes lithium iron phosphate and a negative electrode active material includes graphite, a secondary battery cell may have an upper cut-off voltage of 3.65 V and a lower cut-off voltage of 2.5 V.

For example, when a positive electrode active material includes a lithium transition metal oxide with a molar ratio of Ni element less than 0.8, such as LiNi_{0.5}Co_{0.2}Mn_{0.3}O₂, and a negative electrode active material includes graphite, a secondary battery cell may have an upper cut-off voltage of 4.35 V and a lower cut-off voltage of 2.8 V.

For example, a positive electrode active material includes a lithium transition metal oxide with a molar ratio of Ni element greater than or equal to 0.8, such as LiNi_{0.8}Co_{0.1}Mn_{0.1}O₂, LiNi_{0.8}Co_{0.15}Al_{0.05}O₂, and LiNi_{0.9}Co_{0.06}Mn_{0.04}O₂, and when a negative electrode active material includes graphite, a secondary battery cell may have an upper cut-off voltage of 4.25 V and a lower cut-off voltage of 2.8 V.

A molar ratio of element Ni refers to a ratio of a molar amount of element Ni to a total molar amount of transition metal elements in a lithium transition metal oxide.

When the internal pressure of the secondary battery cell reaches the predetermined threshold value, the pressure relief mechanism performs an action or a weak region provided in the pressure relief mechanism is broken, thereby forming an opening or a channel through which the internal pressure can be drained. The area S₁ of the first pressure relief portion of the first pressure relief mechanism refers to the maximum area of the opening or channel formed by the first pressure relief mechanism for draining internal pressure. The area S₂ of the second pressure relief portion of the second pressure relief mechanism refers to the maximum area of the opening or channel formed by the second pressure relief mechanism for draining internal pressure.

The secondary battery cell 7 satisfies that (S₁+S₂)/C₀ is larger than or equal to 2.5 mm²/Ah, for example, 2.8 mm²/Ah, 3.0 mm²/Ah, 3.2 mm²/Ah, 3.4 mm²/Ah, 3.6 mm²/Ah, 3.8 mm²/Ah, 4.0 mm²/Ah, 4.2 mm²/Ah, 4.4 mm²/Ah, 4.5 mm²/Ah, 4.8 mm²/Ah, 5.0 mm²/Ah, 5.2 mm²/Ah, 5.5 mm²/Ah, or a range composed of any of the above values.

Optionally, (S₁+S₂)/C₀ is 4.0 mm²/Ah-5.5 mm²/Ah or 4.0 mm²/Ah-5.0 mm²/Ah.

The adjustment of an area of a pressure relief portion corresponding to a unit capacity, namely, (S₁+S₂)/C₀, to be within the foregoing range facilitates a dynamic balance achieved between a gas production rate and a gas exhaust amount of the secondary battery cell, which thereby may effectively reduce or even prevent safety accidents such as fire and explosion of the secondary battery cell. Meanwhile, the end cover assembly may further be enabled to have good processing performance because a larger area of a pressure relief portion of a pressure relief mechanism means more difficulty in processing the end cover assembly and thus does not facilitate a reduction in a cost of a secondary battery cell and large-scale production of the secondary battery cell.

Optionally, a mass percentage content of dimethyl carbonate in a solvent may be 55 wt%-70 wt%. Therefore, an electrolyte infiltration property of the electrode assembly may be improved, so that the secondary battery cell has good cycle performance.

In some embodiments, the solvent further includes one or both of ethylene carbonate (EC) and ethyl methyl carbonate (EMC). Optionally, the solvent further includes both ethylene carbonate (EC) and ethyl methyl carbonate (EMC).

Dimethyl carbonate may enable the electrolyte to have a low viscosity to facilitate flow of the electrolyte. However, dimethyl carbonate' ability to dissolve an electrolyte salt is weak. Through use of dimethyl carbonate in combination with ethylene carbonate and/or ethyl methyl carbonate, the electrolyte may have high ionic conductivity and a relatively wide electrochemical window while it has good fluidity. Thus, a secondary battery cell has better cycle performance.

Optionally, the mass percentage content of the ethylene carbonate in the solvent may be greater than 0 and less than or equal to 25 wt%.

Optionally, a mass percentage content of the ethyl methyl carbonate in the solvent may be greater than 0 and less than or equal to 25 wt%.

In some embodiments, the solvent includes dimethyl carbonate (DMC), ethylene carbonate (EC), and ethyl methyl carbonate (EMC). The mass percentage content of the dimethyl carbonate in the solvent may be 55 wt%-70 wt%. The mass percentage of the ethylene carbonate in the solvent may be 5 wt% -25 wt%. The mass percentage content of the ethyl methyl carbonate in the solvent may be 5 wt%-25 wt%. Therefore, the electrolyte may have high ion conductivity and a wide electrochemical window while it has good fluidity, and thus the secondary battery cell may have better cycle performance.

In some embodiments, the electrolyte further includes an electrolyte salt. Optionally, the electrolyte salt may include, but not limited to, one or a plurality of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis-trifluoromethanesulfonimide (LiTFSI), lithium trifluoromethanesulfonate (LiTFS), lithium difluoro(oxalato)borate (LiDFOB), lithium dioxalate borate (LiBOB), lithium difluorophosphate (LiPO₂F₂), lithium difluorodioxalate phosphate (LiDFOP), or lithium tetrafluorooxalate phosphate (LiTFOP).

In some embodiments, the electrolyte may further include an additive. The additive may include, but is not limited to, one or two of fluoroethylene carbonate (FEC) and vinylene carbonate (VC). Optionally, the additive may include both fluoroethylene carbonate (FEC) and vinylene carbonate (VC).

Optionally, based on a total mass of the electrolyte, a mass percentage content of the fluoroethylene carbonate (FEC) is less than or equal to 5 wt%, optionally 0.05 wt%-5 wt%, or 0.1 wt%-3 wt%.

Optionally, based on the total mass of the electrolyte, a mass percentage content of vinylene carbonate (VC) is less than or equal to 5 wt%, optionally 0.05 wt%-5 wt%, or 0.1 wt%-3 wt%.

The additive may participate in the formation of a solid electrolyte interface film on a surface of a negative electrode, thereby contributing to the improvement of the cycle performance of the secondary battery cell.

In some embodiments, the viscosity of the electrolyte at 25 °C may be greater than 0 and less than or equal to 5 mPa·s, optionally greater than 0 and less than or equal to 3 mPa·s. Therefore, it is facilitated to improve an electrolyte infiltration property of an electrode assembly, so that a secondary battery cell has good cycle performance.

The viscosity of the electrolyte may be measured by a viscometer. A shear force applied to a rotor when it continuously rotates at a constant rotational speed in a sample causes a spring to generate a torque. The torque is proportional to a viscosity, thereby obtaining a viscosity value of the sample.

For example, the viscosity of the electrolyte may be tested through the following method: 30 mL of a sample is taken and kept in a water bath at 25 °C for at least 30 min at an ambient humidity of <80%, a rotor (e.g., a No.18 rotor) is placed into a sample cup, the sample is added to the cup to a position about 0.3 cm from a cup rim, a connected viscometer is started to rotate at a speed of 70 RPM for 5 min, and reading is made to obtain a viscosity value. In the test, 10 data points may be collected and averaged. A testing instrument may be a Brookfield DV-2TLV viscometer.

In some embodiments, the conductivity of the electrolyte at 25 °C may be 8 mS/cm-16 mS/cm, optionally 9 mS/cm to 12 mS/cm.

The conductivity of the electrolyte may be obtained through a conductivity meter. For example, an appropriate amount of an electrolyte may be taken and divided into 3 parts on average. Then, the conductivity of each sample is measured at 25 °C through a conductivity meter. The obtained test results are averaged to serve as the conductivity of the electrolyte. A test instrument may be a DDS-307 conductivity meter.

In some embodiments, the electrolyte may have a liquid retention coefficient of 2.5 g/Ah-4.2 g/Ah, optionally 2.8 g/Ah-3.5 g/Ah.

The liquid retention coefficient of the electrolyte refers to a ratio of a liquid retention amount of the electrolyte to a capacity C₀ of a secondary battery cell.

A liquid retention amount of an electrolyte may be tested by the following method: a secondary battery cell is weighed, a mass is recorded as m0, then the secondary battery cell is disassembled to separate an electrolyte via centrifugation, disassembled solid components are all immersed in an acetonitrile solution, taken out after immersion for 2 h, dried at room temperature, and transferred to an oven at 60 °C for baking for 4 hours or more, the components are weighed again, and a mass is recorded as m1. A mass difference between m0 and m1 is defined as the liquid retention amount of the electrolyte.

Respective components and contents thereof in an electrolyte may be determined based conventional methods in the art. For example, a mass percentage content of an electrolyte salt in an electrolyte may be tested through ion chromatography (IC). A mass percentage content of dimethyl carbonate (DMC) in a solvent may be tested through gas chromatography-mass spectrometry (GC-MS).

The electrolyte may be sampled for analysis during a preparation process, or may be obtained by disassembling a prepared secondary battery cell and performing centrifugation after discharging.

As shown in FIG. 5, in some embodiments, a first end cover assembly 8 includes a first cover plate 83. The first cover plate 83 covers a first opening. The first cover plate 83 may have various structures, for example, a plate-shaped structure.

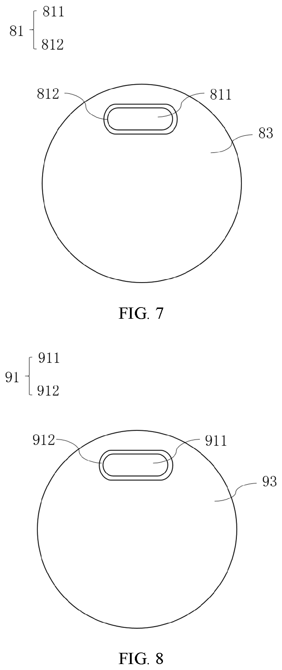

For example, a first pressure relief mechanism 81 may be located on the first cover plate 83. For example, the first pressure relief mechanism 81 and the first cover plate 83 may be two members provided separately, and are connected by welding, riveting, bonding, or other means. The first cover plate 83 has a first through hole. The first pressure relief mechanism 81 may be located in the first through hole. FIG. 7 is a schematic diagram of a connection of a first pressure relief mechanism with a first cover plate according to some embodiments of the present disclosure. As shown in FIG. 7, the first pressure relief mechanism 81 may be located on the first cover plate 83. The first pressure relief mechanism 81 includes a first pressure relief portion 811 and a first connecting portion 812 arranged on a periphery of the first pressure relief portion 811. The first connecting portion 812 may be arranged on a side wall of the first through hole by welding, riveting, bonding, or other methods.

Alternatively, the first pressure relief mechanism 81 and the first cover plate 83 are integrally formed. For example, the first pressure relief mechanism 81 may be a part of the first cover plate 83.

As shown in FIG. 6, in some embodiments, a second end cover assembly 9 includes a second cover plate 93. The second cover plate 93 covers a second opening. The second cover plate 93 may have various structures, for example, a plate-shaped structure.

The second pressure relief mechanism 91 is located on the second cover plate 93. For example, the second pressure relief mechanism 91 and the second cover plate 93 may be two members provided separately, and are connected by welding, riveting, bonding, or other means. The second cover plate 93 has a second through hole. The second pressure relief mechanism 91 may be located in the second through hole. FIG. 8 is a schematic diagram of a connection of a second pressure relief mechanism with a second cover plate according to some embodiments of the present disclosure. As shown in FIG. 8, a second pressure relief mechanism 91 may be located on a second cover plate 93. The second pressure relief mechanism includes a second pressure relief portion 911 and a second connecting portion 912 arranged on a periphery of the second pressure relief portion 911. The second connecting portion 912 may be arranged on a side wall of the second through hole by welding, riveting, bonding, or other means. Alternatively, the second pressure relief mechanism 91 and the second cover plate 93 are integrally formed. For example, the second pressure relief mechanism 91 may be a part of the second cover plate 93.

In some embodiments, an area of the first pressure relief portion may be smaller than an area of the first pressure relief mechanism. An area of the second pressure relief portion may be smaller than an area of the second pressure relief mechanism. As shown in FIG. 7 and FIG. 8, an area of the first pressure relief portion 811 is smaller than an area of the first pressure relief mechanism 81, and an area of the second pressure relief portion 911 is smaller than an area of the second pressure relief mechanism 91.

In some embodiments, the area of the first pressure relief portion may be equal to the area of the first pressure relief mechanism, and the area of the second pressure relief portion may be equal to the area of the second pressure relief mechanism.

In some embodiments, a dimension of a secondary battery cell 7 in an axial direction is denoted as L in unit of mm. The secondary battery cell 7 satisfies that (S₁+S₂)/L is greater than or equal to 0.6 mm, for example, 0.6 mm, 0.63 mm, 0.66 mm, 0.69 mm, 0.7 mm, 0.74 mm, 0.77 mm, 0.8 mm, 0.82 mm, 0.84 mm, 0.86 mm, 0.88 mm, 0.9 mm, or a range consisting of any of the above values.

Optionally, (S₁+S₂)/L may be 0.7 mm-0.9 mm.

The secondary battery cell 7 is a cylindrical secondary battery cell. The axial direction of the secondary battery cell 7 refers to a direction of a central axis of rotation of the cylinder, namely, a direction identical to that of a central axis. A radial direction of the secondary battery cell 7 is perpendicular to the axial direction. The radial direction of the secondary battery cell 7 is a diameter direction of an end face circle of the cylinder. A dimension of the secondary battery cell 7 in the axial direction is generally referred to as a length of the secondary battery cell 7.

The dimension L of the secondary battery cell 7 in the axial direction refers to a distance between an outer surface of a first end cover assembly 8 and an outer surface of a second end cover assembly 9, namely, a distance between an outer surface of a first cover plate 83 and an outer surface of a second cover plate 93. It may be understood that the dimension L of the secondary battery cell 7 in the axial direction does not include the dimension of an electrode terminal.

As the dimension of the secondary battery cell in the axial direction is increased, a discharging path of the secondary battery cell is longer. By adjusting an area of a pressure relief portion corresponding to a unit length, i.e., (S₁+S₂)/L, within the above range, it is beneficial to quickly discharge emissions inside the secondary battery cell, and achieve a pressure relief purpose in a short time, which thereby may effectively reduce or even prevent safety accidents such as fire and explosion of the secondary battery cell.

In some embodiments, a ratio of an area of a first pressure relief portion to an area of a second pressure relief portion may be 0.8-1.2.

In some embodiments, the area of the first pressure relief portion may be equal to the area of the second pressure relief portion.

In some embodiments, a ratio of the area of a first pressure relief portion to an area of a first end cover assembly 8 may be greater than or equal to 0.02: 1, optionally (0.04-0.10): 1, or (0.06-0.08): 1.

Therefore, it is beneficial to quickly discharge emissions inside the secondary battery cell, and achieve a pressure relief purpose in a short time, which thereby may effectively reduce or even prevent safety accidents such as fire and explosion of the secondary battery cell, and also may enable good processing performance of the first end cover assembly.

In some embodiments, a ratio of the area of the second pressure relief portion to an area of a second end cover assembly 9 may be greater than or equal to 0.02:1, optionally (0.04-0.10): 1, or (0.06-0.08): 1.

Therefore, it is beneficial to quickly discharge emissions inside the secondary battery cell, and achieve a pressure relief purpose in a short time, which thereby may effectively reduce or even prevent safety accidents such as fire and explosion of the secondary battery cell, and also may enable good processing performance of the second end cover assembly.

An electrode assembly includes a main body portion and a tab portion extending from the main body portion in an axial direction. The tab portion is configured to lead out a current generated by the main body portion. The main body portion is a core portion of a secondary battery cell that implements charging and discharging functions. The main body portion usually includes a positive electrode sheet, a negative electrode sheet, and a separator. When an electrode assembly is prepared, the positive electrode sheet, the separator, and the negative electrode sheet are usually connected to a winding needle. Then the winding needle is rotated to wind the positive electrode sheet, the separator, and the negative electrode sheet on the winding needle. After the winding is completed, the winding needle is pulled out to form a cylindrical electrode assembly. After the winding needle is pulled out, a center hole is usually formed at a winding center of the electrode assembly.

In some embodiments, the center of the electrode assembly has a center hole extending in an axial direction of a secondary battery cell. A diameter of the center hole is greater than or equal to 5 mm, optionally 6 mm-8 mm.

Through the adjustment of the diameter of the center hole to be within the above range, it is beneficial to quickly discharge emissions inside the secondary battery cell, and achieve a pressure relief purpose in a short time, which thereby may effectively reduce or even prevent safety accidents such as fire and explosion of the secondary battery cell.

In some embodiments, both a first pressure relief mechanism 81 and a second pressure relief mechanism 91 are symmetrically arranged. As such, paths of discharged emissions may be in a straight line, which is beneficial to quickly discharge emissions inside the secondary battery cell, and achieve a pressure relief purpose in a short time, which thereby may effectively reduce or even prevent safety accidents such as fire and explosion of the secondary battery cell.

In some embodiments, shapes of the first pressure relief mechanism 81 and the second pressure relief mechanism 91 each independently comprise a circular shape, an elliptical shape, or a racetrack shape.

In some embodiments, the first end cover assembly 8 includes a first electrode terminal 82. The second end cover assembly 9 includes a second electrode terminal 92. The first electrode terminal 82 and the second electrode terminal 92 have opposite polarities. The first electrode terminal 82 may be mounted on the first cover plate 83. The second electrode terminal 92 may be mounted on the second cover plate 93.

The first electrode terminal 82 and the second electrode terminal 92 are configured to be electrically connected to the electrode assembly to output electrical energy generated by the electrode assembly.

In some embodiments, the number of tab portions may be two. The two tab portions are defined as a positive electrode tab portion and a negative electrode tab portion, respectively. The two tab portions are electrically connected to the first electrode terminal 82 and the second electrode terminal 92, respectively. The tab portions may be directly connected to the first electrode terminal 82 and the second electrode terminal 92 through welding or the like, or may be indirectly connected to the first electrode terminal 82 and the second electrode terminal 92 through another member.

Optionally, the first electrode terminal 82 may be a positive electrode terminal. The second electrode terminal may be a negative electrode terminal.

Optionally, the positive tab portion is electrically connected to the first electrode terminal 82. The negative tab portion is connected to the second electrode terminal 92.

In some embodiments, a distance between a geometric center point of the first pressure relief mechanism 81 and a geometric center point of the first electrode terminal 82 may be greater than or equal to 5 mm, optionally 6 mm-14 mm.

In some embodiments, a distance between a geometric center point of the second pressure relief mechanism 91 and a geometric center point of the second electrode terminal 92 may be greater than or equal to 5 mm, optionally 6 mm-14 mm.

In some embodiments, one of the first cover plate 83 and the second cover plate 93 is provided with a liquid injection hole 84. As shown in FIG. 4 and FIG. 5, the liquid injection hole 84 is provided in the first cover plate 83.

The liquid injection hole is used to inject an electrolyte into the secondary battery cell.

In some embodiments, a diameter of the secondary battery cell 7 may be greater than or equal to 40 mm, optionally 45 mm-60 mm. As such, the secondary battery cell may have a high capacity.

In some embodiments, a dimension of the secondary battery cell 7 in an axial direction may be greater than or equal to 130 mm, optionally, 150 mm-320 mm, 200 mm-320 mm, 240 mm-320 mm, or 280 mm-320 mm. As such, the secondary battery cell may have a high capacity.

In some embodiments, a capacity C₀ of the secondary battery cell 7 may be greater than or equal to 20 Ah, optionally greater than or equal to 30 Ah.

In some embodiments, for the cylindrical housing 10, a material may include, but is not limited to, hard plastics, aluminium, steel, or the like.

### [Positive electrode sheet]

In some embodiments, the positive electrode sheet includes a positive electrode current collector and a positive electrode film layer located at at least a side of the positive electrode current collector, the positive electrode film layer including a positive electrode active material.

The positive electrode active material may enable intercalation/deintercalation of lithium ions.

In some implementations, the positive electrode active material may include one or more of lithium-containing phosphate and a lithium transition metal oxide.

The lithium-containing phosphate may include one or more of lithium iron phosphate, lithium manganese phosphate, lithium manganese iron phosphate, and respective modified compounds thereof. Examples of the lithium transition metal oxide may include one or more of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and respective modified compounds thereof. The modified compound of each of the above positive electrode active materials may be a compound of the positive electrode active material subjected to doping modification and/or surface coating modification.

Optionally, the positive electrode active material may include a lithium-containing phosphate. More optionally, the positive electrode active material may include one or more of lithium iron phosphate and a modified compound thereof. Optionally, the modified compound of lithium iron phosphate may be obtained through one or more modification methods of element doping, conductive carbon coating, conductive metal coating, and conductive polymer coating.

In some embodiments, the positive electrode active material may include a lithium-containing phosphate. A mass ratio of the lithium-containing phosphate in the positive electrode active material may be greater than or equal to 60 wt%, for example, 60 wt%, 70 wt%, 80 wt%, 90 wt%, 100 wt%, or a range consisting of any of the above values.

In some embodiments, the positive electrode active material may include both the lithium-containing phosphate and the lithium transition metal oxide. The mass ratio of the lithium-containing phosphate in the positive electrode active material may be 60 wt%-99 wt%. The mass ratio of the lithium transition metal oxide in the positive electrode active material may be 1 wt%-40 wt%.

In some embodiments, a volume distribution particle size Dv50 of the positive electrode active material is 0.8 µm-10 µm.

Through the adjustment of the volume distribution particle size Dv50 of the positive electrode active material to be within the above range, side reactions in the secondary battery cell may be reduced, and a capacity fading rate of the secondary battery cell may be reduced, prolonging a cycle life of the secondary battery cell.

In some embodiments, the positive electrode film layer may further include a positive electrode conductive agent. As an example, the positive electrode conductive agent may include, but is not limited to, one or more of superconducting carbon, conductive graphite, acetylene black, carbon black, ketjen black, carbon dot, carbon nanotube, graphene, and carbon nanofiber.

In some embodiments, the positive electrode film layer may further include a positive electrode binder. As an example, the positive electrode binder may include, but is not limited to, one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, a coating weight of the positive electrode film layer may be greater than or equal to 16 mg/cm², optionally, 18mg/cm²-25mg/cm². As such, the secondary battery cell may have a high energy density.

In some embodiments, a compacted density of the positive electrode film layer may be greater than or equal to 2.2 g/cm³. For example, the compacted density of the positive electrode active layer is 2.25 g/cm³-2.6 g/cm³. As such, the secondary battery cell may have a high energy density.

The compacted density of the positive electrode film layer is a ratio of a surface density of the positive electrode film layer to a thickness of the positive electrode film layer. The surface density of the positive electrode film layer refers to a ratio of a weight of the positive electrode film layer dried and rolled after coating to a coating area.

In some embodiments, the positive electrode current collector may be metal foil or a composite current collector. As an example of the metal foil, aluminum foil may be used. The composite current collector may include a polymer material base layer and a metal material layer formed on at least one surface of the polymer material base layer. As an example, the metal material may include, but is not limited to, one or more of aluminum, an aluminum alloy, nickel, a nickel alloy, titanium, a titanium alloy, silver, and a silver alloy. As an example, the polymer material base layer may include, but is not limited to, one or more of polypropylene (PP), polyethylene terephthalate (PET), polybutylene terephthalate (PBT), polystyrene (PS), and polyethylene (PE).

The positive electrode film layer is generally formed by applying a positive electrode paste on the positive electrode current collector, followed by drying and rolling. The positive electrode paste is generally formed by dispersing a positive electrode active material, a positive electrode binder, a positive electrode conductive agent, etc. in a solvent and mixing them well. The solvent may be N-methylpyrrolidone (NMP) or de-ionized water, but is not limited thereto.

### [Negative electrode sheet]

In some embodiments, the negative electrode sheet may include a negative electrode current collector and a negative electrode film layer located on at least one surface of the negative electrode current collector, the negative electrode film layer including a negative electrode active material.

In some embodiments, the negative electrode active material may include one or a plurality of a carbon-based material and a silicon-based material.

Optionally, the carbon-based material may include, but is not limited to, one or a plurality of artificial graphite and natural graphite.

Optionally, the silicon-based material may include, but is not limited to, one or a plurality of elemental silicon, a silicon oxide, a silicon-carbon composite, a silicon-nitrogen composite, or a silicon alloy.

Optionally, the silicon-based material may further include one or more of an alkali metal element and an alkaline earth metal element. Optionally, the alkali metal includes Li. Optionally, the alkaline earth metal includes Mg. As an example, the silicon-based material may be a Li-pre-intercalated silicon-based material.

In some embodiments, a mass ratio of the silicon-based material in the negative electrode active material may be greater than or equal to 5 wt%, more optionally, 8 wt%-20 wt%, thereby improving the energy density of the secondary battery cell.

In some embodiments, the negative electrode active material may include a carbon-based material and a silicon-based material. A mass ratio of the silicon-based material in the negative electrode active material may be 8 wt%-20 wt%. A mass ratio of the carbon-based material in the negative electrode active material may be greater than or equal to 80 wt%. This allows the secondary battery cell to have both a high energy density and a long cycle life.

In some embodiments, a volume distribution particle size Dv50 of the positive electrode active material is 6 µm-15 µm, optionally 8 µm to 13 µm.

Through the adjustment of the volume distribution particle size Dv50 of the negative electrode active material to be within the above range, side reactions in the secondary battery cell may be reduced, prolonging a cycle life of the secondary battery cell.

In some embodiments, the negative electrode film layer may further include a negative electrode conductive agent. As an example, the negative electrode conductive agent may include one or more of superconducting carbon, conductive graphite, acetylene black, carbon black, ketjen black, a carbon dot, a carbon nanotube, graphene, and a carbon nanofiber.

In some embodiments, the negative electrode film layer may further include a negative electrode binder. As an example, the negative electrode conductive agent may include, but is not limited to, one or a plurality of styrene-butadiene rubber (SBR), aqueous unsaturated resin SR-1B, aqueous acrylic resin (for example, polyacrylic acid (PAA), polymethacrylic acid (PMAA), and sodium polyacrylate (PAAS)), polyacrylamide (PAM), polyvinyl alcohol (PVA), sodium alginate (SA), or carboxymethyl chitosan (CMCS).

In some embodiments, the negative electrode film layer may further include other auxiliary agents. As an example, the other auxiliary agents may include a thickening agent, such as carboxymethylcellulose (CMC) sodium and a PTC thermistor material.

In some embodiments, the negative electrode current collector may be metal foil or a composite current collector. Examples of the metal foil may include a copper foil, a copper alloy foil, a nickel foil, an aluminum foil, and an aluminum alloy foil. The composite current collector may include a polymer material base layer and a metal material layer formed on at least one surface of the polymer material base layer. As an example, the metal material may include, but is not limited to, one or more of copper, a copper alloy, nickel, a nickel alloy, titanium, a titanium alloy, silver, and a silver alloy. As an example, the polymer material base layer may include, but is not limited to, one or more of polypropylene (PP), polyethylene terephthalate (PET), polybutylene terephthalate (PBT), polystyrene (PS), and polyethylene (PE).

The negative electrode sheet does not exclude other additional functional layers in addition to the negative electrode film layer. For example, in some embodiments, the negative electrode sheet further includes a conductive undercoating layer, for example, which may be composed of a conductive agent and a binder, sandwiched between the negative electrode current collector and the negative electrode film layer and located on the surface of the negative electrode current collector. In some embodiments, the negative electrode sheet may further include a protective layer covering a surface of the negative electrode film layer.

The negative electrode sheet may be prepared by the following method. A negative electrode active material, a negative electrode binder, a negative electrode conductive agent, optionally other auxiliary agents, and the like are dispersed in a solvent and are stirred uniformly to form a negative electrode slurry; the negative electrode slurry is coated on a negative electrode current collector, and a negative electrode sheet is formed after processing steps such as drying, rolling. The solvent may be N-methylpyrrolidone (NMP) or de-ionized water, but is not limited thereto.

Dv50 of a material (such as a positive electrode active material, and a negative electrode active material) has a meaning well known in the art, and may be measured using an instrument or a method known in the art. For example, Dv50 may be readily measured with reference to GB/T 19077-2016, using a laser particle size analyzer (e.g., Malvern Mastersizer 3000). The physical definition of Dv50 is a corresponding particle size when a cumulative volume distribution percentage of the material reaches 50%.

### [Separator]

In some embodiments, the separator is located between the positive electrode sheet and the negative electrode sheet, and primarily functions to prevent an internal short circuit. The type of the separator is not particularly limited in the present disclosure, and any well-known porous separator with good chemical stability and mechanical stability may be used.

In some embodiments, for the separator, a material may be one or more of glass fiber, nonwoven fabric, polyethylene, polypropylene, polyvinylidene fluoride, and polyimide. The separator may be a single-layer film or a multilayer composite film. When the separator is a multilayer composite thin film, materials of all the layers are the same or different.

A preparation method for the secondary battery cell is well known.

In some embodiments, the preparation method includes the following steps: providing a cylindrical housing having an accommodating chamber and a first opening and a second opening communicating with the accommodating chamber; providing an electrode assembly and placing the electrode assembly in the cylindrical housing; providing a first end cover assembly and a second end cover assembly, the first end cover assembly including a first pressure relief mechanism, the second end cover assembly including a second pressure relief mechanism, covering a first opening with a first end cover assembly and covering a second opening with a second end cover assembly; and injecting an electrolyte a secondary battery cell, followed by processing steps such as vacuum packaging, standing, and formation to obtain a secondary battery cell.

In some embodiments, the positive electrode sheet, the separator, and the negative electrode sheet may be usually connected to a winding needle. Then the winding needle is rotated to wind the positive electrode sheet, the separator, and the negative electrode sheet on the winding needle. After the winding is completed, the winding needle is pulled out to form a cylindrical electrode assembly.

### Examples

The following examples describe the disclosure of the present disclosure more specifically. These examples are used only for illustration, since various modifications and changes made within the scope of the disclosure of the present disclosure are obvious to those skilled in the art. Unless otherwise stated, all parts, percentages and ratios reported in the following example are on a mass basis. All reagents used in the examples are commercially available or can be synthesized according to conventional methods, and used directly without further processing. The instruments used in the example are commercially available.

### Example 1

Lithium iron phosphate (LiFePO₄) as a positive electrode active material, polyvinylidene fluoride as a binder, and Super P as a conductive agent were mixed at 97: 2: 1, and N-methylpyrrolidone (NMP) as a solvent was added and stirred uniformly to obtain a positive electrode slurry. The positive electrode slurry was uniformly coated on two surfaces of a positive electrode current collector copper foil, dried, and cold pressed to obtain the positive electrode sheet. A coating weight of the positive electrode film layer was 19.5 mg/cm², and the compacted density was 2.4 g/cm³.

Artificial graphite as a negative electrode active material, Super P as a conductive agent, styrene-butadiene rubber as a binder, and sodium carboxymethyl cellulose as a thickening agent were mixed at a mass ratio of 96.2: 0.6: 1.3: 1.9, and then an appropriate amount of deionized water as a solvent was added, uniformly stirred, and mixed to obtain a negative electrode slurry. The negative electrode slurry was uniformly coated on two surfaces of a negative electrode current collector copper foil, dried, and cold pressed to obtain the negative electrode sheet. A coating weight of the negative electrode film layer was 9.4 mg/cm², and the compacted density was 1.4 g/cm³.

For a separator, a porous PP separator was used.

Dimethyl carbonate (DMC), ethyl methyl carbonate (EMC), and ethylene carbonate (EC) were mixed at a mass ratio of 60: 20: 20 to obtain an organic solvent. Then LiPF₆ was dissolved in the above organic solvent to prepare an electrolyte with a concentration of 1.0mol/L. Then fluoroethylene carbonate (FEC) and vinylene carbonate (VC) were added, where the content of FEC was 1 wt% of the total mass of the electrolyte, and the content of VC was 1 wt% of the total mass of the electrolyte.

The positive electrode sheet, the separator, and the negative electrode sheet were stacked sequentially and connected to a winding needle. Then the winding needle was rotated to wind the positive electrode sheet, the separator, and the negative electrode sheet on the winding needle. After the winding was completed, the winding needle was pulled out to form a cylindrical electrode assembly.

The electrode assembly was placed in a cylindrical housing with openings at both ends. A first end cover assembly and a second end cover assembly were welded to both ends of the cylindrical housing, respectively. The first end cover assembly includes a first pressure relief mechanism. The second end cover assembly includes a second pressure relief mechanism. Then an electrolyte was injected, and the secondary battery cell was obtained through processing steps such as vacuum packaging, standing, and formation.

The secondary battery cell has a capacity C₀ of 50.0 Ah, a diameter of 46 mm, and a dimension L in an axial direction of 280 mm. A diameter of a center hole of the electrode assembly is 8 mm. An area S₁ of the first pressure relief portion of the first pressure relief mechanism is 112.5 mm². An area S₂ of the second pressure relief portion of the second pressure relief mechanism is 112.5 mm².

### Example 2

A secondary battery cell was prepared in the same manner as in Example 1 except for the following differences.

Dimethyl carbonate (DMC) and ethylene carbonate (EC) were mixed at a mass ratio of 80: 20 to obtain an organic solvent. Then LiPF₆ was dissolved in the above organic solvent to prepare an electrolyte with a concentration of 1.0mol/L. Then fluoroethylene carbonate (FEC) and vinylene carbonate (VC) were added, where the content of FEC was 1 wt% of the total mass of the electrolyte, and the content of VC was 1 wt% of the total mass of the electrolyte.

### Comparative Example 1

Lithium iron phosphate (LiFePO₄) as a positive electrode active material, polyvinylidene fluoride as a binder, and Super P as a conductive agent were mixed at 97: 2: 1, and N-methylpyrrolidone (NMP) as a solvent was added and stirred uniformly to obtain a positive electrode slurry. The positive electrode slurry was uniformly coated on two surfaces of a positive electrode current collector copper foil, dried, and cold pressed to obtain the positive electrode sheet. A coating weight of the positive electrode film layer was 19.5 mg/cm², and the compacted density was 2.4 g/cm³.

Artificial graphite as a negative electrode active material, Super P as a conductive agent, styrene-butadiene rubber as a binder, and sodium carboxymethyl cellulose as a thickening agent were mixed at a mass ratio of 96.2: 0.6: 1.3: 1.9, and then an appropriate amount of deionized water as a solvent was added, uniformly stirred, and mixed to obtain a negative electrode slurry. The negative electrode slurry was uniformly coated on two surfaces of a negative electrode current collector copper foil, dried, and cold pressed to obtain the negative electrode sheet. A coating weight of the negative electrode film layer was 9.4 mg/cm², and the compacted density was 1.4 g/cm³.

For a separator, a porous PP separator was used.

Dimethyl carbonate (DMC), ethyl methyl carbonate (EMC), and ethylene carbonate (EC) were mixed at a mass ratio of 30: 50: 20 to obtain an organic solvent. Then LiPF₆ was dissolved in the above organic solvent to prepare an electrolyte with a concentration of 1.0mol/L. Then fluoroethylene carbonate (FEC) and vinylene carbonate (VC) were added, where the content of FEC was 1 wt% of the total mass of the electrolyte, and the content of VC was 1 wt% of the total mass of the electrolyte.

The positive electrode sheet, the separator, and the negative electrode sheet were usually connected to a winding needle. Then the winding needle was rotated to wind the positive electrode sheet, the separator, and the negative electrode sheet on the winding needle. After the winding was completed, the winding needle was pulled out to form a cylindrical electrode assembly.

The electrode assembly was placed in a cylindrical housing with an opening at one end. An end cover assembly was welded to the opening end of the cylindrical housing. The end cover assembly includes a pressure relief mechanism. Then an electrolyte was injected. The secondary battery cell was obtained through processes such as vacuum packaging, standing, and formation.

The secondary battery cell has a capacity C₀ of 50.0 Ah, a diameter of 46 mm, a dimension L in an axial direction of 280 mm. A diameter of the center hole of the electrode assembly is 8 mm. An area of the pressure relief portion of the pressure relief mechanism is 225.0 mm².

### Comparative Example 2

A secondary battery cell was prepared in the same manner as in Comparative Example 1 except for the following differences.

Dimethyl carbonate (DMC), ethyl methyl carbonate (EMC), and ethylene carbonate (EC) were mixed at a mass ratio of 60: 20: 20 to obtain an organic solvent. Then LiPF₆ was dissolved in the above organic solvent to prepare an electrolyte with a concentration of 1.0mol/L. Then fluoroethylene carbonate (FEC) and vinylene carbonate (VC) were added, where the content of FEC was 1 wt% of the total mass of the electrolyte, and the content of VC was 1 wt% of the total mass of the electrolyte.

### Comparative Example 3

A secondary battery cell was prepared in the same manner as in Comparative Example 1 except for the following differences.

An area of the pressure relief portion of the pressure relief mechanism was 125.0 mm².

### Comparative Example 4

A secondary battery cell was prepared in the same manner as in Comparative Example 2 except for the following differences.

An area of the pressure relief portion of the pressure relief mechanism was 125.0 mm².

### Test for performance of secondary battery cell

### (1) Test for capacity of secondary battery cell

At 25 °C, a secondary battery cell is subjected to: standing for 5 min and discharging to 2.5 V at a constant current of 0.33 C; standing for 5 min, then charging to 2.5 V at a constant current of 0.33 C, and then charging to a current of 0.05 C at a constant voltage; and standing for 5 min, and then discharging to 3.65 V at a constant current of 0.33 C. A discharge capacity at this time is recorded as a capacity C₀ of the secondary battery cell.

### (2) Test for energy density of secondary battery cell

At 25 °C, a secondary battery cell is charged at a constant current of 0.33 C to 3.65 V, and then charged at a constant voltage to a current of 0.05 C; and standing for 5 min, the secondary battery cell is discharged at a constant current of 0.33 C to 2.5 V to obtain discharge energy Q.

An energy density of the secondary battery cell (Wh/L) = the discharge energy Q/volume V of the secondary battery cell.

The volume V of the secondary battery cell may be calculated based on a volume formula of a cylinder: V = (π × d × d) × L × 0.25. L is a dimension of the secondary battery cell in an axial direction, d is a diameter of the secondary battery cell, and units are all mm.

### (3) Test for cycling performance of secondary battery cell

At 25 °C, a secondary battery cell is charged at a constant current of 1 C to an upper cut-off voltage of 3.65 V, and then charged at a constant voltage to a current of 0.05 C. After standing for 5 min, the secondary battery cell is discharged at a constant current of 1 C to 2.5 V. A discharge capability at this time is recorded as a first-cycle discharge capacity. The secondary battery cell is continually subjected to a cyclic charge-discharge test according to the method described above until the discharge capacity of the secondary battery is attenuated to 80% of the first-cycle discharge capacity. The cycle number of the secondary battery cell is recorded.

### (4) Test for overcharge performance of secondary battery cell

At 25 °C, a secondary battery cell is charged at a constant current of 0.33 C and a constant voltage to an upper cut-off voltage of 3.65 V and then charged at a constant voltage to a current of 0.05 C. Then, the secondary battery cell is charged at a constant current of 1 C for 1 h or the voltage of the secondary battery cell reaches 1.5 times the upper cut-off voltage (namely, 3.65 V). When any condition is met, charging is stopped. Then the secondary battery cell is left to stand for 1h. Whether the secondary battery cell failed is observed. A criterion for determining that the secondary battery cell does not fail is that the secondary battery cell does not ignite or explode. The number of secondary battery cell samples is 20. A passing ratio of an overcharge test of a secondary battery cell is counted.

**Table 1**

| No. | Secondary Battery Cell Test Result | |
|---|---|---|
| | Number of Cycles/Cycle at 25 °C | Passing Ratio of Overcharge Test |
| Example 1 | 2515 | 20/20 |
| Example 2 | 2500 | 18/20 |
| Comparative Example 1 | 2215 | 11/20 |
| Comparative Example 2 | 2498 | 10/20 |
| Comparative Example 3 | 2210 | 6/20 |
| Comparative Example 4 | 2489 | 6/20 |

It may be seen from the test results of Examples 1 to 2 and Comparative Example 1 that the mass percentage content of dimethyl carbonate in the electrolyte solvent that is greater than or equal to 50 wt% facilitates flow of an electrolyte to improve the electrolyte infiltration property of the electrode assembly, thereby improving the cycle performance of the secondary battery cell.

Comparative Examples 1 and 2 have a pressure relief mechanism provided at only an end of a secondary battery cell, and the area of the pressure relief portion of the pressure relief mechanism that is the same as the total area of the pressure relief portions of the two pressure relief mechanisms of Example 1.

It can be seen from the test results of Example 1 and Comparative Example 2 that, when the capacity of the secondary battery cell and the electrolyte of the secondary battery cell are the same, it is facilitated to quickly discharge emissions inside the secondary battery cell, and achieve the purpose of pressure relief in a short time by providing the pressure relief mechanism at both ends of the secondary battery cell, so that the secondary battery cell may have good cycle performance and a high passing ratio of an overcharge test.

It can also be seen from the test results of Comparative Examples 1 and 2 that the overcharge performance of the secondary battery cell is not significantly improved by reducing the mass percentage content of dimethyl carbonate in the electrolyte solvent. This is because a path for discharging emissions inside a secondary battery cell is relatively long when only an end of the secondary battery cell is provided with the pressure relief mechanism. Thus, problems of untimely pressure relief and slow pressure relief may occur. In addition, the mass percentage of dimethyl carbonate is reduced, the fluidity of the electrolyte is deteriorated, the electrolyte infiltration property of the electrode assembly is deteriorated, and the cycle performance of the secondary battery cell is also significantly reduced.

It can also be seen from the test results of Comparative Examples 1 and 3, and Comparative Examples 2 and 4 that an increase in an area of a pressure relief portion of a secondary battery cell cannot effectively increase an overcharge test ratio of the secondary battery cell when only an end of the secondary battery cell is provided with a pressure relief mechanism. This is because a path for discharging emissions inside a secondary battery cell is relatively long when only an end of the secondary battery cell is provided with the pressure relief mechanism. Thus, problems of untimely pressure relief and slow pressure relief may occur. In addition, due to the limited area of the end cover assembly, a larger area of a pressure relief portion of a pressure relief mechanism makes it more difficult to process an end cover assembly, thereby increasing a cost of a secondary battery cell and also adversely affecting large-scale production.

### Example 3

A secondary battery cell was prepared in the same manner as in Example 1 except for the following differences.

An area S₁ of a first pressure relief portion of a first pressure relief mechanism was 125.0 mm². Ab area S₂ of a second pressure relief portion of a second pressure relief mechanism was 125.0 mm².

### Example 4

A secondary battery cell was prepared in the same manner as in Example 1 except for the following differences.

An area S₁ of a first pressure relief portion of a first pressure relief mechanism was 100.0 mm². Ab area S₂ of a second pressure relief portion of a second pressure relief mechanism was 100.0 mm².

### Example 5

A secondary battery cell was prepared in the same manner as in Example 1 except for the following differences.

An area S₁ of a first pressure relief portion of a first pressure relief mechanism was 62.5 mm². Ab area S₂ of a second pressure relief portion of a second pressure relief mechanism was 62.5 mm².

### Comparative Example 5

A secondary battery cell was prepared in the same manner as in Example 1 except for the following differences.

An area S₁ of a first pressure relief portion of a first pressure relief mechanism was 50.0 mm². Ab area S₂ of a second pressure relief portion of a second pressure relief mechanism was 50.0 mm².

**Table 2**

| No. | Secondary Battery Cell Parameter | | Secondary Battery Cell Test Result | |
|---|---|---|---|---|
| | (S₁+S₂)/C₀ | (S₁+S₂)/L | Number of Cycles/Cycle at 25 °C | Passing Ratio of Overcharge Test |
| Example 1 | 4.5 mm²/Ah | 0.80 mm | 2515 | 20/20 |
| Example 3 | 5.0 mm²/Ah | 0.89 mm | 2512 | 20/20 |
| Example 4 | 4.0 mm²/Ah | 0.71 mm | 2500 | 19/20 |
| Example 5 | 2.5 mm²/Ah | 0.45 mm | 2491 | 16/20 |
| Comparative Example 5 | 2.0 mm²/Ah | 0.36 mm | 2486 | 13/20 |

It can be seen from the test results in Table 2 that the reliability of the secondary battery cell may be improved by adjusting the ratio of the total area of the pressure relief portions of two pressure relief mechanisms to the capacity of the secondary battery cell (S₁+S₂)/C₀ to be greater than or equal to 2.5 mm²/Ah.

It can also be seen from the test results in Table 2 that the reliability of the secondary battery cell may be further improved by further adjusting the range of the ratio of the total area of the pressure relief portions of the two pressure relief mechanisms to a dimension of the secondary battery cell in an axial direction (S₁ + S₂)/L.

### Example 6

A secondary battery cell was prepared in the same manner as in Example 1 except for the following differences.

The secondary battery cell has a capacity C₀ of 52.5 Ah, and a dimension L in an axial direction of 320 mm. An area S₁ of the first pressure relief portion of the first pressure relief mechanism is 118.1 mm². An area S₂ of the second pressure relief portion of the second pressure relief mechanism is 118.1 mm².

### Example 7

A secondary battery cell was prepared in the same manner as in Example 1 except for the following differences.

The secondary battery cell has a capacity C₀ of 54.4 Ah and a dimension L in an axial direction of 400mm. An area S₁ of the first pressure relief portion of the first pressure relief mechanism is 122.4 mm². An area S₂ of the second pressure relief portion of the second pressure relief mechanism is 122.4 mm².

**Table 3**

| No. | Secondary Battery Cell Parameter | | Secondary Battery Cell Test Result |
|---|---|---|---|
| | (S₁+S₂)/C₀ | (S₁+S₂)/L | Passing Ratio of Overcharge Test |
| Example 6 | 4.5 mm²/Ah | 0.74 mm | 19/20 |
| Example 7 | 4.5 mm²/Ah | 0.61 mm | 16/20 |

Compared with Example 1, Examples 6 and 7 have a diameter of a secondary battery cell that is unchanged and an increased axial dimension. In this case, the capacity of the secondary battery cell may be increased. By increasing the area of the pressure relief portions of the two pressure relief mechanisms in Examples 6 and 7 and keeping the ratio of the total area of the pressure relief portions of the two pressure relief mechanisms to the capacity of the secondary battery cells (S₁+S₂)/C₀ to be same as that in Example 1, the secondary battery cells can have a relatively high passing rate of an overcharge test.

In addition, it may be further learned from the test results of Example 1, Example 6, and Example 7 that when the ratios of the total areas of the pressure relief portions of the two pressure relief mechanisms to the capacity of the secondary battery cell (S₁+S₂)/C₀ are the same, the ratio of the total areas of the pressure relief portions of the two pressure relief mechanisms to the dimension of the secondary battery cell in the axial direction (S₁+S₂)/L increases, so that the secondary battery cell may have a higher passing ratio of an overcharge test.

### Example 8

A secondary battery cell was prepared in the same manner as in Example 1 except for the following differences.

The secondary battery cell has a capacity C₀ of 51.3 Ah. The diameter of the center hole of the electrode assembly is 5 mm. An area S₁ of the first pressure relief portion of the first pressure relief mechanism is 115.4 mm². An area S₂ of the second pressure relief portion of the second pressure relief mechanism is 115.4 mm².

### Example 9

A secondary battery cell was prepared in the same manner as in Example 1 except for the following differences.

The secondary battery cell has a capacity C₀ of 52.6 Ah. A diameter of a center hole of the electrode assembly is 3 mm. An area S₁ of the first pressure relief portion of the first pressure relief mechanism is 118.4 mm². An area S₂ of the second pressure relief portion of the second pressure relief mechanism is 118.4 mm².

**Table 4**

| No. | Secondary Battery Cell Parameter | | Secondary Battery Cell Test Result | |
|---|---|---|---|---|
| | (S₁+S₂)/C₀ | Center Hole Diameter (mm) | Energy Density (Wh/L) | Passing Ratio of Overcharge Test |
| Example 1 | 4.5 mm²/Ah | 8 | 344 | 20/20 |
| Example 8 | 4.5 mm²/Ah | 5 | 353 | 19/20 |
| Example 9 | 4.5 mm²/Ah | 3 | 362 | 14/20 |

It may also be seen from the test results in Table 4 that the secondary battery cell may have a higher passing rate of an overcharge test while having a high energy density through further adjustment of the diameter of the center hole when the ratio of the total areas of the pressure relief portions of the two pressure relief mechanisms to the capacity of the secondary battery cell (S₁+S₂)/C₀ are the same.

It should be noted that the present disclosure is not limited to the aforementioned embodiments. The aforementioned embodiments are merely examples, and any embodiment having substantially the same configuration as the technical concept and exhibiting the same operation and effect within the scope of the claims of the present disclosure is included in the technical scope of the present disclosure. In addition, various modifications that can be conceived by those skilled in the art may be made to the embodiments without departing from the subject matter of the present disclosure, and other embodiments constructed by combining some of the constituent elements in the embodiments are also included in the scope of the present disclosure.

## Claims

1. A secondary battery cell, comprising:
a cylindrical housing having an accommodating chamber and a first opening and a second opening communicating with the accommodating chamber;
an electrode assembly arranged within the accommodating chamber;
a first end cover assembly covering the first opening; and
a second end cover assembly covering the second opening,
wherein the first end cover assembly comprises a first pressure relief mechanism, and the second end cover assembly comprises a second pressure relief mechanism;
the secondary battery cell further comprises an electrolyte, the electrolyte comprises a solvent, the solvent comprises dimethyl carbonate, and a mass percentage content of the dimethyl carbonate in the solvent is greater than or equal to 50 wt%;
the first pressure relief mechanism has a first pressure relief portion, and an area of the first pressure relief portion is denoted as S₁, in unit of mm²;
the second pressure relief mechanism has a second pressure relief portion, and an area of the second pressure relief portion is denoted as S₂, in unit of mm²; and
a capacity of the secondary battery cell is denoted as C₀, in unit of Ah, and the secondary battery cell satisfies that (S₁+S₂)/C₀ is greater than or equal to 2.5 mm²/Ah.

2. The secondary battery cell according to claim 1, wherein the secondary battery cell satisfies that (S₁+S₂)/C₀ is 4.0 mm²/Ah-5.0 mm²/Ah.

3. The secondary battery cell according to any one of claims 1 to 2, wherein
a dimension of the secondary battery cell in an axial direction is denoted as L, in unit of mm; and
the secondary battery cell satisfies that (S₁ + S₂)/L is 0.6 mm or more.

4. The secondary battery cell according to any one of claims 1 to 3, wherein the secondary battery cell satisfies that (S₁+S₂)/L is 0.7 mm-0.9 mm.

5. The secondary battery cell according to any one of claims 1 to 4, wherein
a ratio of an area of the first pressure relief portion to an area of the second pressure relief portion is 0.8-1.2; and/or
a ratio of the area of the first pressure relief portion to an area of the first end cover assembly is greater than or equal to 0.02: 1; and/or
a ratio of the area of the second pressure relief portion to an area of the second end cover assembly is greater than or equal to 0.02: 1.

6. The secondary battery cell according to any one of claims 1 to 5, wherein
the ratio of the area of the first pressure relief portion to the area of the first end cover assembly is (0.04-0.10): 1; and/or
the ratio of the area of the second pressure relief portion to the area of the second end cover assembly is (0.04-0.10): 1.

7. The secondary battery cell according to any one of claims 1 to 6, wherein a center of the electrode assembly has a center hole extending in an axial direction of the secondary battery cell, and a diameter of the center hole is greater than or equal to 5 mm.

8. The secondary battery cell according to claim 7, wherein the diameter of the center hole is 6 mm-8 mm.

9. The secondary battery cell according to any one of claims 1 to 8, wherein
a diameter of the secondary battery cell is greater than or equal to 40 mm; and/or
a dimension L of the secondary battery cell in an axial direction is greater than or equal to 130 mm; and/or
a capacity C₀ of the secondary battery cell is greater than or equal to 20 Ah.

10. The secondary battery cell according to any one of claims 1 to 9, wherein
the diameter of the secondary battery cell is 45 mm- 60 mm; and/or
the dimension L of the secondary battery cell in the axial direction is 150 mm-320 mm; and/or
the capacity C₀ of the secondary battery cell is greater than or equal to 30 Ah.

11. The secondary battery cell according to any one of claims 1 to 10, wherein the mass percentage content of the dimethyl carbonate in the solvent is 55 wt%-70 wt%.

12. The secondary battery cell according to any one of claims 1 to 11, wherein the solvent further comprises one or both of ethylene carbonate and ethyl methyl carbonate.

13. The secondary battery cell according to claim 12, wherein
a mass percentage content of the ethylene carbonate in the solvent is less than or equal to 25 wt%; and/or
a mass percentage content of the ethyl methyl carbonate in the solvent is less than or equal to 25 wt%.

14. The secondary battery cell according to any one of claims 1 to 13, wherein the electrolyte further comprises an additive, and the additive comprises one or two of fluoroethylene carbonate and vinylene carbonate.

15. The secondary battery cell according to any one of claims 1 to 14, wherein
a viscosity of the electrolyte at 25 °C is less than or equal to 5 mPa·s; and/or
a conductivity of the electrolyte is 8 mS/cm-16 mS/cm at 25 °C.

16. The secondary battery cell according to any one of claims 1 to 15, wherein
the viscosity of the electrolyte at 25 °C is less than or equal to 3 mPa·s; and/or
the conductivity of the electrolyte is 9 mS/cm-12 mS/cm at 25 °C.

17. The secondary battery cell according to any one of claims 1 to 16, wherein both the first pressure relief mechanism and the second pressure relief mechanism are arranged symmetrically.

18. The secondary battery cell according to any one of claims 1 to 17, wherein
shapes of the first pressure relief mechanism and the second pressure relief mechanism each independently comprise a circular shape, an elliptical shape, or a racetrack shape; and/or
the first end cover assembly comprises a first cover plate, and the first pressure relief mechanism is located on the first cover plate or the first pressure relief mechanism is integrally formed with the first cover plate; and/or
the second end cover assembly comprises a second cover plate, and the second pressure relief mechanism is located on the second cover plate or the second pressure relief mechanism is integrally formed with the second cover plate.

19. The secondary battery cell according to any one of claims 1 to 18, wherein
the first end cover assembly comprises a first electrode terminal, the second end cover assembly comprises a second electrode terminal, and the first electrode terminal and the second electrode terminal have opposite polarities,
a distance between a geometric center point of the first pressure relief mechanism and a geometric center point of the first electrode terminal is 6 mm-14 mm; and/or
a distance between a geometric center point of the second pressure relief mechanism and a geometric center point of the second electrode terminal is 6 mm-14 mm.

20. The secondary battery cell according to any one of claims 1 to 19, wherein the electrode assembly comprises a positive electrode sheet, the positive electrode sheet comprises a positive electrode current collector and a positive electrode film layer located on at least a surface of the positive electrode current collector, the positive electrode film layer comprises a positive electrode active material, and the positive electrode active material comprises one or more of lithium-containing phosphate and a lithium transition metal oxide.

21. The secondary battery cell according to claim 20, wherein the positive electrode active material comprises a lithium-containing phosphate, and a mass percentage of the lithium-containing phosphate in the positive electrode active material is greater than or equal to 60 wt%.

22. The secondary battery cell according to any one of claims 20 and 21, wherein
a coating weight of the positive electrode film layer is greater than or equal to 16 mg/cm²; and/or
a compacted density of the positive electrode film layer is greater than or equal to 2.2 g/cm³.

23. The secondary battery cell according to claim 22, wherein
the coating weight of the positive electrode film layer is 18 mg/cm² -25 mg/cm²; and/or
the compacted density of the positive electrode film layer is 2.25 g/cm³-2.6 g/cm³.

24. A secondary battery, comprising the secondary battery cell according to any one of claims 1 to 23.

25. An electric device, comprising the secondary battery according to claim 24.
